# EUROPÄISCHE PATENTSCHRIFT

(11) **EP 0 492 135 B1**
(45) Veröffentlichungstag und Bekanntmachung des Hinweises auf die Patenterteilung: **28.09.1994**
(21) Anmeldenummer: 91119822.4
(22) Anmeldetag: 21.11.1991
(51) Int. Cl.: B01D 53/00, F24F 3/16

(54) **Vorrichtung zur Luftreinigung mit Bio-Filtern sowie Verfahren für eine derartige Luftreinigung**
Device for purification of air with bio filters and process for such a purification of air
Dispositif pour la purification d'air avec des filtres à bio et procédé pour une telle purification d'air

(30) Priorität: 20.12.1990 DE 4041007
(43) Veröffentlichungstag der Anmeldung: 01.07.1992
(73) Patentinhaber: Kessler & Luch GmbH, D-35394 Giessen 1 (DE)
(72) Erfinder: Detzer, Rüdiger, Dr.-Ing., W-6305 Alten-Busseck (DE); Bernt, Peter, Dipl.-Ing., W-6360 Friedberg (DE)

(56) Entgegenhaltungen:
- EP-A- 0 237 001
- EP-A- 0 300 101
- EP-A- 0 329 643
- DE-A- 3 803 613

## Beschreibung

Die Erfindung betrifft eine Vorrichtung zur Luftreinigung mit Bio-Filtern, die über eine Überströmleitung mit vorgeschaltetem Befeuchtungsturm mit Abwassersumpf verbunden sind, wobei die Abluft über eine Rohrleitung von einer Quelle, wie beispielsweise Küche, Grillstation, Bratstation o.dgl. entnommen und mittels eines Ventilators in das/die Bio-Filter gedrückt wird; sie betrifft weiter ein Verfahren, das eine vorteilhafte Luftreinigung mit dieser Vorrichtung erlaubt.

Viele Verunreinigungsquellen, vor allem kleinere, bilden für die Umgebung eine Belästigung, wobei in einer Vielzahl von Fällen die Belästigung vorwiegend in unzumutbaren Gerüchen gesehen wird. Dabei können auch an sich angenehme Gerüche, wirken sie über längere Zeiten ein, belästigend wirken. Geruchsprobleme zu lösen ist schon vielfach vorgeschlagen worden. So werden Geruchsstoffe, die in aller Regel als organische Verbindungen vorliegen und so durch Oxidation abbaubar sind, thermisch, ggf. unter Mitwirkung katalytischer Verfahren in Kohlendioxid und Wasser verbrannt. Derartige Verbrennungseinrichtungen sind jedoch nur für Großanlagen geeignet, besonders, wenn die Geruchsstoffe in so hoher Konzentration anfallen, daß der Wärmehaushalt derartiger thermischer Verfahren nahezu ausgeglichen ist und nur geringfügig Fremdenergie zur Stützung gebraucht wird. Es ist weiter bekannt, derartige Geruchsstoffe durch Adsorption aus der Abluft abzuscheiden, wobei mit der Adsorption selbst zunächst noch keine Vernichtung der Geruchsstoffe verbunden ist. Diese kommt erst im zweiten Schritt, denn die beladenen Adsorptionsmaterialien müssen, soll das Verfahren wirtschaftlich anwendbar sein, von Zeit zu Zeit desorbiert und ggf. auch regeneriert werden. Zu der Desorption und ggf. Regeneration wird wiederum Wärmeenergie gebraucht, die in diesen Fällen aus der Verbrennung des bei der Desorption in hoher Konzentration anfallenden Desorbats gewonnen werden kann. Ist das Desorbat wirtschaftlich von Interesse, kann es auch zurückgewonnen werden, dann müssen die Energieaufwendungen aus dem Gewinn der Rückgewinnung gedeckt werden. Welcher Weg dabei vorzuziehen ist, ist von Fall zu Fall verschieden. In allen Fällen werden (von dem Sonderfall der Rückgewinnung abgesehen) die Geruchsstoffe durch Oxidation abgebaut.

Einen derartigen Abbau leisten auch Mikroorganismen in Bio-Filtern mit "kalter" Oxidation im Rahmen ihres Metabolismus. Dabei werden die organischen Stoffe ebenso wie bei thermischem Abbau in Kohlendioxid und Wasser zerlegt. Derartige Bio-Filter sind bekannt; das Problem ihres ungestörten Betriebs liegt in ihrer Empfindlichkeit der Mikroorganismen gegenüber einer Austrocknung.

Verfahren zur Befeuchtung und dafür geeignete Befeuchter sind aus der Luftaufbereitungstechnik, insbesondere aus der Klimatechnik bekannt. Bei diesen Verfahren wird die Luft mit relativ geringer Geschwindigkeit durch Sprühkammern geleitet und mittels eingesprühten Wassers auf Feuchtegrade nahe dem Taupunkt gebracht. Voraussetzung dafür ist eine gleichmäßige Luftverteilung über den durchströmten Querschnitt der Kammern, wobei im allgemeinen hinreichend Platz für einen strömungsgerechten Übergang vom Ventilator-Ausblasstutzen zur Kammer gegeben ist. In besonderen Fällen wird dabei zur Vergleichmäßigung der Strömung ein Wandfilter vorgeschaltet. Diese Art der Luftbefeuchtung ist jedoch bei verunreinigter, insbesondere Fettaerosole enthaltender Luft nicht geeignet, da diese Verunreinigungen wegen des daraus resultierenden Niederschlags eine geordnete Befeuchtung derartiger Abluft stören. Darüber hinaus bedarf es einer Vergleichmäßigung der Strömung, so daß ein direkter Anschluß eines Ventilators an derartige Befeuchter nicht möglich ist. Die DE-A-3803613 beschreibt ein Verfahren zur Reinigung staubhaltiger, organisch verunreinigter Abgase eines Abgasstromes mit biologischer Nachreinigung, sowie eine Vorrichtung zum Durchführen des Verfahrens. Mit dem Verfahren soll sichergestellt werden, daß ein möglichst lange andauernder Zustrom ausreichend feuchter Abgase zum Bio-Filter sichergestellt ist. Dazu ist dem Biofilter ein Befeuchter vorgeschaltet, der mit Wasserzerstäuber versehen ist. Die EP 0 329643 A1 schlägt zum Desodorieren und Reinigen von Abluft einen Bio-Filter vor, dem ein Befeuchtungsturm zum Einstellen bzw. Regeln von Temperatur und Feuchte der im Bio-Filter zu reinigenden Abluft vorgeschaltet ist, in den Nasser eingedüst wird. Der Wasserüberschuß sammelt sich am unteren Ende in einem Abwassersumpf, von dem aus Überschußwasser im Kreislauf wieder zurückgeführt werden kann. Befeuchtungsturm und Bio-Filter sind über eine Überströmleitung miteinander verbunden. In diesen Fällen wird das Wasser mit zusätzlichem Energieaufwand zerstäubt, wozu u.a. auch Pumpen und Zerstäuber benötigt werden.

Daraus leitet sich die dieser Erfindung zugrunde liegende Aufgabenstellung ab, nach der eine derartige Anlage so weitergebildet werden soll, daß ein unmittelbarer Ventilatoranschluß an den Befeuchter ermöglicht wird, dessen Aufbau so vorgeschlagen wird, daß ein Betrieb auch mit z.B. mit Fett verunreinigter Luft ohne Zusetz-Gefahr für das Bio-Filter ermöglicht wird, wobei der dem Bio-Filter vorgeschaltete Befeuchter einfach aufgebaut, wirtschaftlich und ohne Zusatzenergie zum Zerstäuben des Befeuchtungswassers betreibbar und ohne wesentlichen Aufwand zu reinigen sein soll.

Diese Aufgabe wird dadurch gelöst, daß zwischen dem Ventilator und dem Bio-Filter ein Befeuchtungsturm geschaltet ist, dessen rohrförmiges Gehäuse mit vertikaler Achse an seinem unteren Ende einen Abwassersumpf und darüber den an den Ventilator anflanschbaren, tangential ausgerichteten Lufteintritt aufweist und dessen oberes Ende eine zentrisch angeschlossene Überströmleitung zum Anschluß des Befeuchters an das Bio-Filter aufweist, wobei in dem rohrförmigen Gehäuse mindestens zwei horizontal ausgerichtete Sprühebenen vorgesehen sind und jede der Sprühebenen mit einer Anordnung von Sprühdüsen versehen ist. Dieser Befeuchter ist ohne Befeuchtungseinbauten wie Horden oder Matten o.dgl. verstopfungssicher; die eintretenden Luft durchströmt ihn in Form einer Drallströmung, der eine axiale Komponente überlagert ist. Durch die Drallströmung wird die Innenseite der Wand des rohrförmigen Behälters feucht gehalten, einem Ansetzen von z.B. abgeschiedenem Fett wird somit vorgebeugt.

In einer Weiterbildung sind zumindest einige der Sprühdüsen der Anordnungen der Sprühdüsen als zentrisch im Gehäuse angeordnete Kegel-Sprühdüse mit nach unten geöffneten Sprühkegel ausgebildet, vorzugsweise als Vollkegel-Sprühdüsen. Mit derartigen Sprühdüsen können die gewünschten Wassermengen rotationssymmetrisch in die Strömung eingebracht werden, wobei Vollkegeldüsen neben der notwendigen Wandbefeuchtung auch die für das Anfeuchten der Luft besonders im Zentrum der Drallströmung notwendige Strahlkonfiguration liefern.

In einer anderen Weiterbildung sind eine oder mehrere der Sprühdüsenanordnungen, vorzugsweise vom oberen Ende aus, mit steuerbaren Ventilen versehen, wobei vorzugsweise ein mit den Ventilen zusammenwirkender Steuerkreis mit einem Feuchtesensor am Bio-Filter als Fühler vorgesehen ist. Durch diese Ventile, die in den Düsenzuleitungen angeordnet sind, wird erreicht, daß die im Bio-Filter anstehende Feuchte gemessen und die Anfeuchtung der dem Bio-Filter zuströmenden Abluft darauf eingestellt wird. So kann zum einen das Austrocknen des Bio-Filters wirksam überwacht und eine Übersättigung des Bio-Filters mit Wasser verhindert werden,

Eine vorteilhafte Ausführungsform ist dadurch gegeben, daß der Abwassersumpf zweistufig ausgebildet ist, wobei die obere Stufe einen Umwassersammelraum mit einem oberen Überlaufrohr bildet, in dessen unteren Bereich eine Umwasserleitung über eine Druckerhöhungs- und Umwälzpumpe zu den Sprühdüsen über eine Sprühdüsenleitung aufweist, und die untere Stufe einen Abwassersammelraum bildet, aus dem überschüssiges Wasser ggf. mit abgeschiedenen Verunreinigungen über eine Abwasserleitung abgezogen wird. Durch diese Unterteilung wird die Möglichkeit gegeben, daß aufschwimmende Verunreinigungen, die im Turmbefeuchter abgeschieden werden, wie z.B. Fette, über den Überlauf aus dem Umwassersammelraum entfernt und über den Abwassersammelraum ausgeschleust werden. Es versteht sich von selbst, daß bei einem zusätzlichen Anfall absinkender Verunreinigungen der Umwassersammelraum auch mit einem diese Verunreinigungen ausschleusenden unteren Abzug versehen wird.

Vorteilhaft ist es, wenn der Abwassersumpf in einer oder in beiden seiner Stufen eine Heizeinrichtung aufweist. Diese Heizeinrichtung dient zunächst als Frostschutz, der besonders für den Fall notwendig ist, wenn die Abluft mit einer niederigen Temperatur anfällt, so daß infolge der Abkühlung beim Anfeuchten der Eispunkt unterschritten wird. Darüber hinaus ist es vorteilhaft, wenn diese Heizeinrichtung mit einer Temperatursteuerung versehen ist, wobei die Temperatursteuerung die Wassertemperatur oberhalb des Erstarrungspunktes von im Turmbefeuchter abgeschiedenen Fetten o.dgl. hält. Dadurch werden über den Frostschutz hinaus abgeschiedene Fette o.dgl. flüssig gehalten, so daß eine feste Fettschicht auf dem Überlauf des Umwassersammelraumes und damit eine Behinderung des Über laufens vermieden wird.

Ein vorteilhaftes Verfahren zum Betrieb dieser Vorrichtung zur Luftreinigung ist derart, daß die Feuchtigkeit im Bio-Filter und/oder die Feuchte der aus dem Bio-Filter austretenden, gereinigten Abluft überwacht und die steuerbaren Düsen des Turmbefeuchters derart zu- bzw. abgeschaltet werden, daß ein Austrocknen des Bio-Filters verhindert und eine Übersättigung des Bio-Filters mit Wasser vermieden wird. Diese Steuerung wird dabei vorteilhaft so ausgebildet, daß die für den Betrieb des Bio-Filters optimale Feuchte eingehalten wird. Diese optimale Feuchte stellt das Persistieren der für den Abbau der abgeschiedenen Geruchsstoffe notwendigen Mikroorganismen sicher.

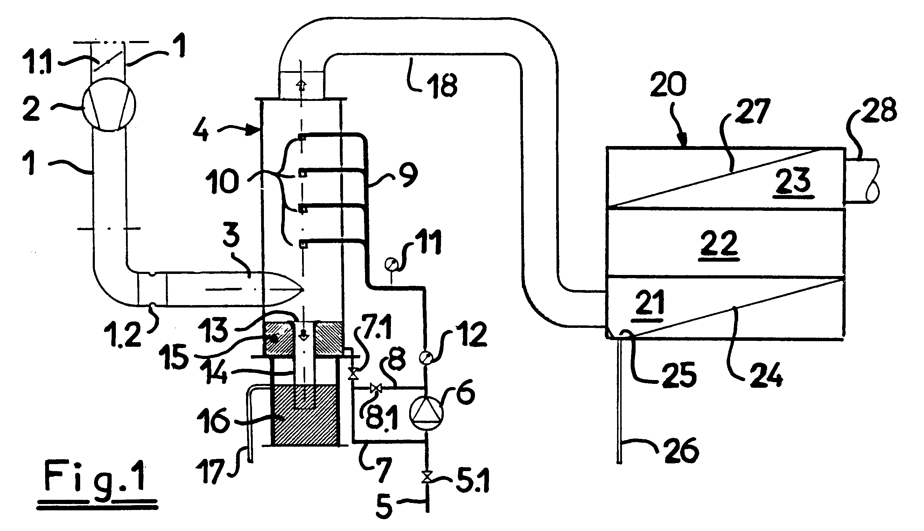

Das Wesen der Erfindung wird an Hand der beigefügten Figur 1 beispielhaft dargestellt; dabei zeigt
- Fig. 1:: Ein vereinfachtes Anlagenschaltbild für die Vorrichtung.

Über den Ansaugstutzen 1 wird dem Bio-Filter 20 die mit Geruchsstoffen beladene Abluft aus einer abzusaugenden Quelle zugeführt. Die Forderung der Abluft übernimmt der Ventilator 2, wobei eine Drosselklappe 1.1 in dem Ansaugstutzen 1 ein Einstellen des abzusaugenden Abluftstromes, der mit Hilfe einer Meßblende 1.2 überwacht werden kann, gestattet. Der Ansaugstutzen 1 ist tangential in dem Gehäuse des Befeuchtungsturmes 4 angeordnet, so daß sich in dem zylindrischen Gehäuse eine Wirbelströmung ausbildet, der eine axiale Komponente in Richtung auf den Übergang zu der Überströmleitung 18 überlagert ist. Dieser axialen Geschwindigkeitskomponente entgegengerichtet wird Wasser aus den Düsen 10 in die Strömung gesprüht, wobei diese Sprühdüsen im allgemeinen als Vollkegel-, in Sonderfällen auch als Hohlkegeldüsen ausgebildet sind.

In dem Befeuchtungsturm 4 wird die Abluft auf nahezu Sättigungszustand angefeuchtet. Dazu wird das eingesprühte Wasser in hohem Überschuß eingedüst, wobei der Wasserüberschuß von dem der axialen Strömung überlagerten Drall nach außen gegen die Wand geschleudert wird und daran abläuft. Das ablaufende Wasser wird in einem Wassersumpf gesammelt, zum Wiedereinsatz. Dazu ist eine erste Stufe als Umwassersammelraum 15 so angeordnet, daß dieser das an der Innenwand des Behälters des Befeuchtungsturmes ablaufende Wasser zunächst aufnimmt. Da bei vielen Geruchsstoffabscheidungen Fettaerosole oder Fettdämpfe in der Abluft enthalten sind, treten beim Anfeuchten besondere Probleme auf, die zum einen in einem unerwünschten Fettansatz an der Innenwand des Behälters und zum anderen in der Verunreinigung des umgewälzten Wassers durch das abgeschiedene oder auskondensierte Fett bedingt sind. Daher muß diese Innenwand durch den hinreichenden Wasserüberschuß ständig feucht gehalten werden. Um die Belastung des umgewälzten Wassers durch Fett zu vermeiden, wird der Umwassersammelraum 15 mit einem Überlauf 13 versehen, über den Wasser mit aufschwimmenden Fetteilchen abläuft, und zwar in einen unteren Abwassersammelraum 16, in den das ableitende Rohr 14 des Überlaufs 13 eintaucht. Das im Umwassersammelraum 15 gesammelte Wasser wird in Bodennähe von einer Umwasserleitung 7 abgenommen und über eine Umwälz- und Druckerhöhungspumpe 6 und die Düsenleitung 9 zu den Düsen 10 zurückgeführt. Ventile 7.1 und 8.1 gestatten das Einstellen bzw. das Abstellen der einzelnen Leitungszweige, wobei ein Pumpenbypaß 8 vorgesehen ist, der einen geförderten Überschuß an Wasser im Kreise führt, so daß mit diesem Pumpenbypaß 8 eine Einstellung der in der Zeiteinheit eingedüsten Wassermenge möglich ist. Da bei dieser Art der Luftbefeuchtung Wasser verdampft und der Mineraliengehalt des zurückbleibenden Wassers anwächst, wird zum Halten eines Mineralienspiegels sowie zur Ergänzung des bei dem Anfeuchten der Abluft verdampften und des über den Wasserablauf 17 abgeführten Wassers Frischwasser zugeführt; dazu ist eine Zuwasserleitung 5 vorgesehen, deren Ventil 5.1 das Einstellen bzw. das Absperren erlaubt. Das Abwasser verläßt den Abwassersammelraum über die Leitung 17, wobei ggf. eine Nachbehandlung entsprechend den Auflagen für die Abwassereinleitung zu berücksichtigen sind.

Die nahezu gesättigte Abluft verläßt den Befeuchtungsturm 4 über die Überströmleitung 18 und gelangt dadurch in das Bio-Filter 20. Dieses besteht aus einer in einem Gehäuse angordneten Filterschicht 22, die im allgemeinen als Schüttschicht ausgebildet ist, wobei die die Schüttschicht bildenden Teile -etwa Rindenabfällemit Mikroorganismen besiedelt sind. Nach der Absorption der Geruchsstoffe durch die feuchten Wasserhäute auf diesen Teilen der Schüttschicht werden diese von den Mirkoorganismen "verzehrt". Da diese Mirkoorganismen nur in einem feuchten Milieu persistieren können, ist die sorfältige Befeuchtung der Abluft eine unbedingte Notwendigkeit. In gleicher Weise bedarf es eines Überschusses an Wasser, um die für den Absorptionsprozess notwendigen feuchten Wasserhäute intakt zu halten. Daher kann die Abluft durchaus noch Wassertröpfchen enthalten, einer Tropfenabscheidung bedarf es nicht. In gleicher Weise ist die Anordnung des Ventilators vor dem Befeuchtungsturm 4 zu werten: Die vom Ventilator 2 geförderte Luft nimmt im Ventilator 4 Verlustwärme auf, die dadurch bedingte Erwärmung senkt die relative Feuchte der Abluft und wirkt somit der notwendigen Befeuchtung entgegen. Die Lufteinleitung in die Filterschicht 22 erfolgt mit Hilfe eines Leitblechs 24, das so geformt ist, daß es z.B. nahe dem Lufteintritt in das Bio-Filter 20 gleichzeitig eine Ablaufrinne 25 bildet. Ein weiteres Leitblech formt den Reinluftsammel- und Abströmraum 23 so, daß die Ausleitung der gereinigten Luft über den Reinluftstutzen 28 strömungsgünstig erfolgen kann.

## Patentansprüche

1. Vorrichtung zur Luftreinigung mit Bio-Filtern, die über eine Überströmleitung mit vorgeschaltetem Befeuchtungsturm mit Abwassersumpf verbunden sind, wobei die Abluft über eine Rohrleitung von einer Quelle, wie beispielsweise Küche, Grillstation, Bratstation o.dgl. entnommen und mittels eines Ventilators in das/die Bio-Filter gedrückt wird, **dadurch gekennzeichnet**, daß der zwischen Ventilator (2) und Bio-Filter (20) geschaltete Befeuchtungsturm (4) mit rohrförmigem Gehäuse mit vertikaler Achse an seinem unteren Ende oberhalb des Abwassersumpfes (15, 16) einen an den Ventilator (2) anflanschbaren, tangential ausgerichteten Lufteintritt (3) und an seinem oberen Ende die Überströmleitung (18) zum Anschluß des Befeuchters (4) an das Bio-Filter (20) zentrisch angeordnet ist, wobei in dem rohrförmigen Gehäuse mindestens zwei horizontal ausgerichtete Sprühebenen vorgesehen sind und jede der Sprühebenen mit einer Anordnung von Sprühdüsen (10) versehen ist.

2. Vorrichtung zur Luftreinigung mit Bio-Filtern nach Anspruch 1, **dadurch gekennzeichnet**, daß zumindest einige der Sprühdüsen (10) der Anordnungen von Sprühdüsen als zentrisch im Gehäuse angeordnete Kegel-Sprühdüse mit nach unten geöffneten Sprühkegel ausgebildet ist, vorzugsweise als Vollkegel-Sprühdüsen.

3. Vorrichtung zur Luftreinigung mit Bio-Filtern nach Anspruch 1 oder 2, **dadurch gekennzeichnet**, daß eine oder mehrere der Sprühdüsen (10), vorzugsweise vom oberen Ende aus, mit steuerbaren Ventilen versehen sind, wobei vorzugsweise ein mit den Ventilen zusammenwirkender Steuerkreis mit einem Feuchtesensor am Bio-Filter (20) als Fühler vorgesehen ist.

4. Vorrichtung zur Luftreinigung mit Bio-Filtern nach einem der Ansprüche 1 bis 3, **dadurch gekennzeichnet**, daß der Abwassersumpf zweistufig ausgebildet ist, wobei die obere Stufe einen Umwassersammelraum (15) mit einem oberen Überlaufrohr (13) bildet, in dessen unteren Bereich eine Umwasserleitung (7) über eine Druckerhöhungs- und Umwälzpumpe (6) zu den Sprühdüsen (10) über eine Sprühdüsenleitung (9) aufweist`, und die untere Stufe einen Abwassersammelraum (16) bildet, aus dem überschüssiges Wasser ggf. mit abgeschiedenen Verunreinigungen über eine Abwasserleitung (17) abgezogen wird.

5. Vorrichtung zur Luftreinigung mit Bio-Filtern nach einem der Ansprüche 1 bis 4, **dadurch gekennzeichnet**, daß der Abwassersumpf (15, 16) mit oberen Umwassersammelraum (15) und unteren Abwassersammelraum (16) zumindest in einem dieser beiden Stufen eine Heizeinrichtung aufweist.

6. Vorrichtung zur Luftreinigung mit Biofiltern nach Anspruch 5, **dadurch gekennzeichnet**, daß eine Temperatursteuerung vorgesehen ist, wobei die Temperatursteuerung die Wassertemperatur oberhalb des Erstarrungspunktes von im Turmbefeuchter abgeschiedenen Fetten o.dgl. hält.

7. Verfahren zum Betrieb einer Vorrichtung zur Luftreinigung mit Bio-Filtern nach einem der Ansprüche 3 bis 6, **dadurch gekennzeichnet**, daß die Feuchtigkeit im Bio-Filter und/oder die Feuchte der aus dem Bio-Filter austretenden, gereinigten Abluft überwacht und die Steuerbaren Düsen des Turmbefeuchters derart zu- bzw. abgeschaltet werden, daß ein Austrocknen des Biofilters verhindert, jedoch eine Übersättigung des Bio-Filters mit Wasser vermieden wird.

## Claims

1. Device for air purification with bio-filters, which are connected by way of an overflow duct with an upstream humidifier tower with a waste water sump, wherein the exhaust air is removed from a source, for example kitchen, grilling station, roasting station or the like, by way of a pipe duct and forced into the bio-filter or bio-filters by means of a blower, characterised thereby that the humidifier tower (4), which is connected between blower (2) and bio-filter (20), with tubular housing with vertical axis is arranged at its lower end above the waste water sump (15, 16) at a tangentially oriented air inlet (3) flange mountable onto the blower (2) and at its upper end the overflow duct (18) for connection of the humidifier (4) to the bio-filter (20) is centrally arranged, wherein at least two horizontally oriented spray planes are provided in the tubular housing and each of the spray planes is provided with an arrangement of spray nozzles (10).

2. Device for air purification with bio-filters according to claim 1, characterised thereby that at least some of the spray nozzles (10) of the arrangement of spray nozzles are constructed as cone spray nozzles, preferably as full cone spray nozzles, arranged centrally in the housing and with downwardly open spray cone.

3. Device for air purification with bio-filters according to claim 1 or 2, characterised thereby that one or more of the spray nozzles (10), preferably starting from the upper end, are provided with controllable valves, wherein a control circuit, which cooperates with the valves, with a moisture sensor is preferably provided as detector at the bio-filter (20).

4. Device or air purification with bio-filters according to claims 1 to 3, characterised thereby that the waste water sump is constructed to be two-staged, wherein the upper stage forms a recirculation water collecting space (15) with an upper overflow pipe (13), the lower region of which has a waste water duct (7) to the spray nozzles (10) by way of a pressure-raising and circulation pump (6) through a spray nozzle duct (9), and the lower stage forms a waste water space (16), from which excess water, in a given case with separated-out contaminants, is withdrawn by way of a waste water duct (17).

5. Device for air purification with bio-filters according to one of claims 1 to 4, characterised thereby that the waste water sump (15, 16) with upper recirculation water space (15) and lower waste water space (16) has a heating device in at least one of these two stages.

6. Device for air purification with bio-filters according to claim 5, characterised thereby that a temperature control is provided, wherein the temperature control keeps the water temperature above the setting point of fats or the like separated out in the tower humidifier.

7. Method of operating a device for air purification with bio-filters according to one of claims 3 to 6, characterised thereby that the moisture in the bio-filter and/or the moisture of the cleaned exhaust issuing from the bio-filter are monitored and the controllable nozzles of the tower humidifier are switched on and off in such a manner that a drying out of the biofilter is prevented by a saturation of the bio-filter with water is avoided.

## Revendications

1. Dispositif pour la purification de l'air par des biofiltres qui sont reliés par un conduit de trop plein devant lequel est placé une tour d'humidification à un bassin des eaux usées, l'air d'évacuation étant prélevé par un conduit tubulaire d'une source, comme par exemple une cuisine, une station à grill, une station à frire ou analogues et est pressé au moyen d'un ventilateur dans le ou les biofiltres, caractérisé en ce que la tour d'humidification (4) placée entre le ventilateur (2) et le biofiltre (20) comprenant un boîtier tubulaire avec un axe vertical présente à son extrémité inférieure au dessus du bassin des eaux usées (15, 16) une entrée d'air (3) orientée tangentiellement, pouvant être flasquée au ventilateur (2) et qu'à son extrémité supérieure est disposé au centre le conduit de trop plein (18) pour le raccordement de l'humidificateur (4) au biofiltre (20), dans le boîtier tubulaire étant prévus au moins deux plans de pulvérisation orientés horizontalement, et chacun des plans de pulvérisation étant pourvu d'un agencement de buses de pulvérisation (10).

2. Dispositif pour la purification de l'air par des biofiltres selon la revendication 1, caractérisé en ce qu'au moins quelques unes des buses de pulvérisation (10) des agencements de buses de pulvérisation sont réalisées sous forme de buses de pulvérisation coniques disposées au centre dans le boîtier avec un cône de pulvérisation ouvert vers le bas, de préférence sous forme de cônes pleins.

3. Dispositif pour la purification de l'air par des biofiltres selon la revendication 1 ou 2, caractérisé en ce qu'une ou plusieurs des buses de pulvérisation (10), de préférence à partir de l'extrémité supérieure, sont pourvues de vannes pouvant être commandées, un circuit de commande, coopérant de préférence avec les vannes, étant prévu comme détecteur, avec un capteur d'humidité au biofiltre (20).

4. Dispositif pour la purification de l'air par des biofiltres selon l'une des revendications 1 à 3, caractérisé en ce que le bassin des eaux usées est réalisé en deux étages, l'étage supérieur formant un espace de collection de l'eau environnante (15) avec un tuyau de trop plein supérieur (13), dans la zone inférieure duquel un conduit des eaux environnantes (7) présente, par une pompe d'augmentation de la pression et de circulation (6), un conduit de buses de pulvérisation (9) vers les buses de pulvérisation (10), et l'étage inférieur constituant un espace de collection des eaux usées (16) duquel est retirée l'eau excédentaire, le cas échéant avec les impuretés séparées, par un conduit des eaux usées (17).

5. Dispositif pour la purification de l'air par des biofiltres selon l'une des revendications 1 à 4, caractérisé en ce que le bassin des eaux usées (15, 16) avec l'espace de collection des eaux environnantes supérieur (15) et l'espace de collection des eaux usées inférieur (16) présentent au moins dans un de ces deux étages un dispositif de chauffage.

6. Dispositif pour la purification de l'air par des biofiltres selon la revendication 5, caractérisé en ce qu'il est prévu une commande de température, la commande de température maintenant la température de l'eau au dessus du point de solidification de graisses ou analogues séparé dans la tour d'humidification.

7. Procédé pour la mise en oeuvre d'un dispositif pour la purification de l'air par des biofiltres selon l'une des revendications 3 à 6, caractérisé en ce que l'humidité dans le biofiltre et/ou l'humidité de l'air d'évacuation purifiée sortant du biofiltre est surveillée, et que les buses pouvant être commandées de la tour d'humidification sont mises en ou hors service de façon à empêcher un dessèchement du biofiltre, cependant de façon à éviter une sursaturation du biofiltre avec de l'eau.
